(19) Europäisches Patentamt
European Patent Office
Office européen des brevets

(11) Veröffentlichungsnummer: **0 218 946**
**B1**

# (12) EUROPÄISCHE PATENTSCHRIFT

(45) Veröffentlichungstag der Patentschrift: **31.10.90**

(51) Int. Cl.⁵: **C08K 5/42**, C08L 81/02

(21) Anmeldenummer: **86112928.6**

(22) Anmeldetag: **18.09.86**

(54) **Schnellkristallisierende Polyphenylensulfidmassen.**

(30) Priorität: **01.10.85 DE 3534946**

(43) Veröffentlichungstag der Anmeldung:
**22.04.87 Patentblatt 87/17**

(45) Bekanntmachung des Hinweises auf die Patenterteilung:
**31.10.90 Patentblatt 90/44**

(84) Benannte Vertragsstaaten:
**DE FR GB IT**

(56) Entgegenhaltungen:
**EP-A- 0 103 279**

**PATENT ABSTRACTS OF JAPAN, Band 9, Nr. 59 (C-270)[1782], 15. März 1985; & JP-A-59 196 364 (ASAHI KASEI KOGYO K.K.) 07-11-1984**

(73) Patentinhaber: **BAYER AG,**
**D-5090 Leverkusen 1 Bayerwerk(DE)**

(72) Erfinder: **Bier, Peter, Dr., Bodelschwinghstrasse 18, D-4150 Krefeld 1(DE)**
Erfinder: **Reinking, Klaus, Dr., Robert-Stolz-Strasse 16b, D-5632 Wermelskirchen 1(DE)**
Erfinder: **Bottenbruch, Ludwig, Dr., Wöhlerstrasse 5, D-4150 Krefeld 1(DE)**
Erfinder: **Tresper, Erhard, Dr., Dahlerdyk 154, D-4150 Krefeld 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft hochkristalline, schnellkristallisierende, thermoplastische Massen aus Polyphenylensulfiden und Sulfonsäureestern.

Polyphenylensulfide können als Rohstoffe für die Herstellung von Fasern, Folien und Formkörpern verwendet werden. Aufgrund ihrer teilkristallinen Struktur besitzen sie hervorragende Eigenschaften, z.B. hohe Verschleißfestigkeit, günstiges Zeitstandverhalten und hohe Maßgenauigkeit. Sie sind daher für die Herstellung mechanisch und thermisch stark beanspruchter Teile gut geeignet.

Eine zusätzliche Verbesserung der mechanischen Eigenschaften läßt sich durch Einarbeitung von Verstärkungsmaterialien, z.B. Glasfasern erzielen.

Die Herstellung von Formkörpern aus Polyphenylensulfid durch Spritzguß ist jedoch erschwert, da hohe Formtemperaturen (> 130°C) und relativ lange Preßzeiten notwendig sind. Werkzeugtemperaturen > 130°C und mehr kann bei den meisten Spritzgußverarbeitern nicht praktiziert werden, da die Werkzeuge im Normalfall für eine Temperatur um 100°C (Heizmittel Wasser) ausgelegt sind. Werkzeugeinrichtungen, die mit anderen Heizmitteln, z.B. Öl betrieben werden und Temperaturen > 110°C erzielen, sind im allgemeinen selten und ihr Gebrauch ist unbequem. Sehr häufig werden damit in der Praxis die gewünschten Temperaturen nicht erzielt, und die Temperaturverteilung ist ungleichmäßig. Wegen dieser Nachteile ist es wirtschaftlich unattraktiv solch hohe Werkzeugtemperaturen im Spritzgußbereich anzuwenden.

Weiterhin ist es wünschenswert hohe Kirstallinität möglichst rasch zu erreichen um ein optimales Eigenschaftniveau zu erhalten. Hohe Kristallinität gewährleistet Härte, Dimensionsstabilität und Formstabilität, auch bei höheren Temperaturen. Außerdem hängt von der Formstandzeit die Dauer des Spritzzyklus ab, welche die Wirtschaftlichkeit mitbestimmt.

Diese Zyklen sind selbst bei den hohen Werkzeugtemperaturen für die Verarbeitung des Polyphenylensulfids relativ lang und erschweren das Vordringen von Polyphenylensulfid bei der Herstellung von Spritzgußformkörpern.

Es wurde nun gefunden, daß Polyphenylensulfide dann höhere Kristallinität besitzen und schneller kristallisieren wenn sie 0.5 - 30 Gew.-%, bezogen auf Polyphenylensulfid Sulfonsäureester enthalten. Dies ermöglicht es, den für die hohe Formstabilität erforderlichen Kristallinitätsgrad schneller zu erreichen und damit die Polyphenylensulfidmassen mit stark verkürzten Spritzzyklen zu verarbeiten.

Ein weiterer Vorteil der erfindungsgemäßen Polyphenylensulfidmassen besteht in der Absenkung der Formtemperatur, ohne daß das gute Kristallisationsverhalten beeinträchtigt wird. Die Spritzgußmasse kühlt schneller ab, wodurch die Formstandzeit weiter abgekürzt wird.

Gegenstand der Erfindung sind hochkristalline, schnell kristallisierende thermoplastische Massen, bestehend aus:

a) 70 - 99,5 vorzugsweise 90 - 98,5, besonders bevorzugt 93 - 97 Gew.-% eines Polyphenylsulfids mit einer Schmelzviskosität von mindestens 5 Pas, vorzugsweise von mindestens 50 Pas, (gemessen bei 306°C und einer Schubspannung von $10^2$ Pa) und

b) 0,5 - 30, vorzugsweise 1,5 - 10, besonders bevorzugt 3 - 7 Gew.-%, bezogen auf a) und b), eines Sulfonsäureesters der durch Umsetzung

1) eines Alkylsulfochlorids der folgenden Formel

$R^1 - CH_2 - (CHR^2)_n - CH_2 R^3$

wobei

$R^1$, $R^2$ and $R^3$ unabhängig voneinander H, Cl oder $SO_2Cl$ sind, wobei mindestens einer der Reste $SO_2Cl$ sein muß, "n" für eine ganze Zahl, von 3-33, vorzugsweise von 10-16, steht und wobei das molare Verhältnis $C/SO_2Cl$ 35 bis 1.25 beträgt,

2) mit äquivalenten Mengen einer Verbindung der Formel (I)

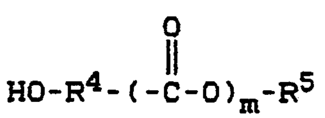

(I),

worin

$R^4$ ein bivalenter aromatischer Rest, vorzugsweise ein Phenylenrest, mit 6-14 C-Atomen und

$R^5$ ein Alkyl-, Cycloalkyl- oder Arylrest mit 1-20 C-Atomen oder H bedeuten und worin

m für die Zahl 0 oder 1 steht,

oder der Formel (II)

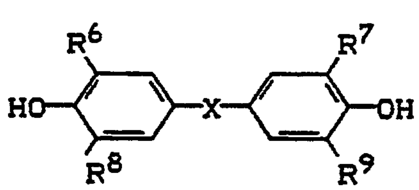

(II),

worin
$R^6$, $R^7$, $R^8$ und $R^9$ gleich oder verschieden sind, und ein Wasserstoffatom, einen Alkylrest mit 1-4 C-Atomen, ein Chlor- oder Bromatom bedeuten und
X eine Einfachbindung, einen Alkylen- oder Alkylidenrest mit 1-8 C-Atomen, einen Cycloalkylen- oder Cycloalkylidenrest mit 5-15 C-Atomen, -S-,

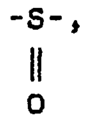

$-SO_2-$, -O- oder

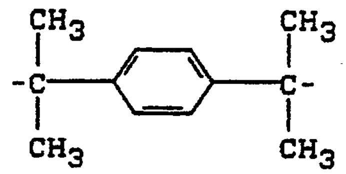

ist, hergestellt wird.

Äquivalent bedeutet im vorliegendem Zusammenhang, daß die Anzahl der $-SO_2Cl$-Reste des Alkylsulfochlorids der Anzahl der OH-Gruppen der aromatischen Reaktionskomponente entspricht.

Ein weiterer Gegenstand der vorliegenden Erfindung ist ein Verfahren zur Herstellung hochkristalliner, schnellkristallisierender thermoplastischen Massen, das dadurch gekennzeichnet ist, daß man 70-99,5, vorzugsweise 90-98,5, besonders bevorzugt 93-97 Gew.-% eines Polyphenylensulfids mit einer Schmelzviskosität von mindestens 5 Pas vorzugsweise von mindestens 50 Pas (306°C, $10^2$ Pa) und 0,5-30, vorzugsweise 1,5-10, besonders bevorzugt 3-7 Gew.-% eines Sulfonsäureesters, der auf die oben angegebene Weise erhältlich ist, mischt, indem man den Sulfonsäureester der Polyphenylensulfidschmelze hinzufügt und in der Schmelze homogenisiert.

Ein weiterer Gegenstand der Erfindung ist ein Verfahren zum Spritzgießen dieser erfindungsgemäß erhältlichen thermoplastischen Massen, das dadurch gekennzeichnet ist, daß man eine Mischung aus einem Polyphenylensulfid mit einer Schmelzviskosität von mindestens 5 Pas, vorzugsweise von mindestens 50 Pas; (gemessen bei 306°C bei einer Spannung von $10^2$ Pa) und einem Sulfonsäureester, der auf die oben angegebene Weise erhältlich ist in Formen gießt, die eine Temperatur von nicht mehr als 120°C aufweisen, wobei die Menge an Sulfonsäureester so gewählt wird, daß das spritzgegossene Polyphenylensulfid mindestens 70 % der Kristallinität aufweist, die man beim Verspritzen eines Formteils aus unmodifizierten Polyphenylensulfid bei Werkzeugtemperaturen von mindestens 130°C erreicht.

Polyarylensulfide lassen sich auf bekannte Weise aus Dihalogenaromaten und Alkalisulfiden in Lösung herstellen. (Siehe beispielsweise US-Patent 2 513 188).

Beispiele für Dihalogenaromaten sind p-Dichlorbenzol, p-Dibrombenzol, 1-Chlor-4-brombenzol, 1,3-Dichlorbenzol, 1,3-Dibrombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Weitere Dihalogenaromaten sind z.B. 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,2, 4,5,-Tetramethyl-3,5-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol und 2,4-Dichlortoluol.

Sollen verzweigte Polyarylensulfide hergestellt werden, werden mindestens 0,05 Mol-% eines Tri- oder Tetrahalogenaromaten zusätzlich eingesetzt.

Damit die Polyphenylensulfide thermoplastisch verarbeitbar bleiben, sollte der Anteil an Tri- oder Tetrahalogenaromaten nicht mehr als 7 Mol-%, bezogen auf eingesetztes Dihalogenbenzol betragen.

Beispiele für Tri- bzw. Tetrahalogenaromaten sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachorbiphenyl, 1,3,5-Trichlortriazin.

Alkalisulfide werden in üblichen Mengen und in üblicher Weise eingesetzt. Z.B. sind Natrium- und Kaliumsulfid geeignet. Es können Alkalisulfide eingesetzt werden, die aus Hydrogensulfiden mit Alkalihydroxiden wie LiOH, NaOH und KOH regeneriert werden. In jedem Fall können Mischungen sowohl der Sulfide als auch der Hydroxide eingesetzt werden.

Generell kann jedes polare Lösungsmittel für die Reaktion eingesetzt werden, das eine ausreichende Löslichkeit der organischen und gegebenenfalls anorganischen Reaktanten unter den Reaktionsbedingungen gewährleistet. Bevorzugt werden N-Alkyllactame verwendet.

N-Alkyllactame sind solche von Aminosäuren mit 3-11 C-Atomen, die gegebenenfalls Substituenten am Kohlenstoffgerüst tragen können, die unter Reaktionsbedingungen inert sind.

Beispielsweise finden als N-Alkyllactame Verwendung:

N-Methylcaprolactam, N-ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-Methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isobutyl-2-piperidon, N-Methyl-6-methyl-2-piperidon, N-Methyl-3-ethyl-2-piperidon.

Für die Herstellung der erfindungsgemäß einzusetzenden Sulfonsäureester bevorzugt geeignete Alkylsulfochloride enthalten 1-4, vorzugweise 1-2, über die Kohlenwasserstoffkette statistisch oder regelmäßig verteilte $-SO_2-Cl$-Gruppen. Zur Umsetzung mit diesen Alkylsulfochloriden geeignete Phenole I sind z.B. Phenyl-, Diphenyl- und Naphthylderivate, oder Bisphenole II sind z.B. Hydrochinon, Resorcin, Dihydroxdiphenyl, Bis-(hydroxyphenyl)-alkane, Bis-(hydroxyphenyl)-cycloalkane, Bis(-hydroxyphenyl)-sulfide, Bis-(hydroxyphenyl)-ether, Bis-(hydroxyphenyl)-sulfoxide, Bis-(hydroxyphenyl)-sulfone, α,α-Bis-hydroxyphenyl)-diisopropyl-benzole sowie deren kernalkylierte und kernhalogenierte Verbindungen.

Die erfindungsgemäß einzusetzenden Sulfonsäureester werden durch Umsetzung von Alkylsulfochloriden mit Phenolen bzw. Phenolderivaten oder Bisphenolen in Gegenwart eines säurebindenen Mittels, vorwiegend Pyridin oder Natronlauge (Phenolat), erhalten.

Sie haben in der Regel ein Molekulargewicht von 220 bis 2000.

Beispiele für geeignete Sulfonsäureester sind ($C_{12}$-$C_{18}$-Alkylsulfonsäure-p-phenylester, ($C_{12}$-$C_{18}$)-Alkyl-di(sulfonsäure-p-phenylester), ($C_{12}$-$C_{18}$)-Alkyl-sulfonsäure-(p-octylphenyl)-ester, ($C_{12}$-$C_{18}$)-Alkylsulfonsäure-(p-butoxycarbonylphenylester, 2,2-Bis-(($C_{12}$-$C_{18}$)-alkylsulfonsäure-4-phenylester)-propan, 2,2-Bis-(($C_{12}$-$C_{18}$)-alkylsulfonsäure-3,5-dichlor-4-phenylester)propan.

Die Herstellung der Mischung von Polyphenylensulfiden und Sulfonsäureester kann auf handelsüblichen Mischgeräten durchgeführt werden. Als solche eignen sich Kneter, Einwellen- und Zweiwellenextruder. Für die weitere Verarbeitung kann die erhaltene Mischung nach dem Erstarren der Schmelze granuliert werden.

Die Polyphenylensulfidzusammensetzungen können zusätzlich Füll- und/oder Verstärkungsstoffe in Form von Pulvern, Fasern oder Matten enthalten. Beispiele dafür sind Metalle wie Stahl, Kupfer, Aluminium oder Kohlenstoff. Bevorzugte Füllstoffe sind Quarz, Talk oder Kaolin bevorzugte, Verstärkungsstoffe sind Glasfasern.

Weiterhin können die Massen, falls gewünscht, anorganische oder organische Pigmente, Farbstoffe, Fließhilfsmittel, Entformungsmittel, UV-Absorber und/oder Stabilisatoren enthalten.

Um die Flammfestigkeit der Produkte weiter zu erhöhen können sie zusätzlich flammhindernde Additive enthalten wie z.B. solche die Halogen, Phosphor, Phosphor-Stickstoff gegebenenfalls in Kombination mit Oxiden der Elemente der V Nebengruppe wie z.B. Antimonoxid enthalten.

Die Kristallisationsgeschwindigkeit der Polyphenylensulfidmassen kann durch Zusatz von anorganischen oder organischen Keimbildungsmitteln weiter erhöht werden. Dies wird bei den Spritzgußmassen standardmäßig durchgeführt.

Die Mengen liegen zwischen 0,05 und 5, vorzugsweise zwischen 0,1 und 1 Gew.-%. Bevorzugtes Keimbildungsmittel ist Mikrotalk.

Die erfindungsgemäßen Poylphenylensulfidmassen sind ausgezeichnete Ausgangsmaterialien für die Herstellung von Folien und Fasern, vorzugsweise für die Herstellung von Formkörpern aller Art durch Spritzguß.

## Beispiele

Die erfindungsgemäßen Polyphenylensulfidmassen werden durch Mischen und Homogenisieren der Basiskomponenten (siehe Tabelle 1) mit einem 30 mm Werner und Pfleiderer Doppelwellenextruder bei einer Schmelzetemperatur von 310°C hergestellt. Die zu Granulat zerhackten Stränge wurden über Nacht getrocknet.

Am getrockneten Granulat wurde die isotherme Kristallisationsgeschwindigkeit mit Hilfe einer DSC-Apparatur bestimmt. Vorbehandlung der Proben: Aufgeheizt bis 330°C, 1 min auf Temperatur gehalten und in flüssigem Stickstoff abgeschreckt. Die amorphen Proben wurden in der DSC-Apparatur bei 110°C isotherm auskristallisieren lassen, wobei die Änderung der Kristallisationswärme in Abhängigkeit der Zeit registriert wurde (exothermer Peak).

Als Maß für die Kristallisationsgeschwindigkeit ist die Zeit bis zum Erreichen des Maximums in Tabelle 1 als Halbwertszeit eingetragen.

Die in Tabelle 1 aufgeführten erfindungsgemäßen Proben 1-3 bestehen aus einem Polyphenylensulfid mit einer Schmelzviskosität von 50 Pas (gemessen bei 306°C und einer Schubspannung von 100 Pa), 3 Gew.-% eines Sulfonsäureesters und 1 Gew.-% Mikrotalk. Beispiel 4 ist eine entsprechende Polyphenylensulfidprobe ohne Sulfonsäureester zum Vergleich.

Tabelle 1

| Beispiel | Alkylsulfonsäure-ester | Viskosität [cp] | Brechungsindex $n_D^{20}$ | Menge [Gew.-%] | Isotherme (110° C) Kristallisations-geschwindigkeit Halbwertzeit [s] |
|---|---|---|---|---|---|
| 1 | p-Phenyl-($C_{12}$-$C_{18}$)alkyl-sulfonsäureester | 900-1200 | 1,497-1,499 | 3 | 12 |
| 2 | p-Phenyl-($C_{12}$-$C_{18}$)alkyl-disulfonsäure-ester | 1276 | 1,5205 | 3 | 13 |
| 3 | p-Phenyloctyl-($C_{12}$-$C_{18}$)alkyl-sulfonsäureester | 1540 | 1,4975 | 3 | 10 |
| 4 | - | - | - | - | 42 |

## Patentansprüche

1. Hochkristalline, schnellkristallisierende thermoplastische Massen bestehend aus
a) 70 - 99,5 Gew.% eines Polyphenylensulfids, mit einer Schmelzviskosität von mindestens 5 Pas (gemessen bei 306°C und bei einer Schubspannung von $10^2$ Pa) und
b) 0,5 - 30 Gew.% bezogen auf a) und b) eines Sulfonsäureesters, der durch Umsetzung
1) eines Alkylsulfochlorids der folgenden Formel
$R^1 - CH_2 - (CHR^2)_n - CH_2 R^3$
wobei
$R^1$, $R^2$ and $R^3$ unabhängig voneinander H, Cl oder $SO_2Cl$ sind, wobei mindestens eine der Reste $SO_2Cl$ sein muß, "n" für eine ganze Zahl, von 3-33 steht und das molare Verhältnis C/$SO_2Cl$ 35 bis 1.25 beträgt,
2) mit äquivalenten Mengen einer Verbindung der Formel (I)

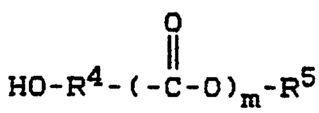 (I),

worin
$R^4$ ein bivalenter aromatischer Rest mit 6-14 C-Atomen und
$R^5$ ein Alkyl-, Cycloalkyl- oder Arylrest mit 1-20 C-Atomen oder H bedeuten und worin
m für die Zahl 0 oder 1 steht,
bedeuten
oder der Formel (II)

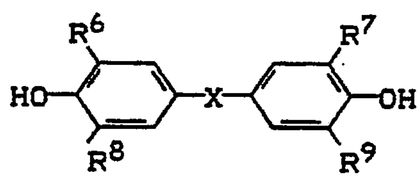 (II),

wobei
$R^6$, $R^7$, $R^8$ und $R^9$ gleich oder verschieden sind, und ein Wasserstoffatom, einen Alkylrest mit 1-4 C-Atomen, ein Chlor- oder Bromatom bedeuten und
X eine Einfachbindung, einen Alkylen- oder Alkylidenrest mit 1-8 C-Atomen, einen Cycloalkylen- oder Cycloalkylidenrest mit 5-15 C-Atomen, -S-,

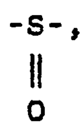

$-SO_2-$, -O- oder

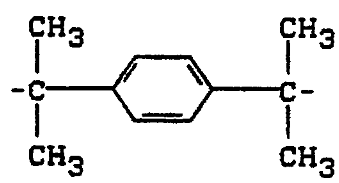

ist, hergestellt wird.

2. Verfahren zur Herstellung von Massen nach Anspruch 1, dadurch gekennzeichnet, daß man 70-99,5 Gew.%, eines Polyphenylensulfids mit einer Schmelzviskosität von mindestens 5 Pas (gemessen bei 306°C und einer Schubspannung von $10^2$ Pa) und 0,5-30 Gew.-% eines Sulfonsäureesters, der auf die oben im Anspruch 1 angegebene Weise erhältlich ist, mischt, indem man den Sulfonsäureester der Polyphenylensulfidschmelze hinzufügt und in der Schmelze homogenisiert.

3. Verfahren zum Spritzgießen von Massen nach Anspruch 1, dadurch gekennzeichnet, daß man eine Mischung aus einem Polyphenylensulfid mit einer Schmelzviskosität von mindestens 5 Pas (gemessen bei 306°C und einer Schubspannung von $10^2$ Pa) und einem Sulfonsäureester, der auf die in Anspruch 1 oben angegebene Weise erhältlich ist, in Formen gießt, die eine Temperatur von nicht mehr als 120°C aufweisen, wobei die Menge an Sulfonsäureester so gewählt ist, daß das spritzgegossene Polyphenylensulfid mindestens 70 % der Kristallinität aufweist, die man beim Verspritzen eines Formteils aus unmodifiziertem Polyphenylensulfid bei Werkzeugtemperaturen von mindestens 130°C erreicht.

**Claims**

1. Highly crystalline, rapidly crystallizing thermoplastic compounds consisting of
a) 70 to 99.5% by weight of a polyphenylene sulfide having a melt viscosity of at least 5 Pas (as measured at 306°C and at a shear rate of $10^2$ Pa) and
b) 0.5 to 30% by weight, based on a) and b), of a sulfonic acid ester obtained by reaction of
1) an alkyl sulfochloride corresponding to the following formula
$R^1–CH_2–(CHR^2)_n–CH_2R^3$
in which
$R^1$, $R^2$ and $R^3$ independently of one another represent H, Cl or $SO_2Cl$, at least one of the substituents having to be $SO_2Cl$ "n" is an integer of 3 to 33, the molar ratio of C to $SO_2Cl$ being from 35 to 1.25.
2) with equivalent quantities of a compound corresponding to formula (I)

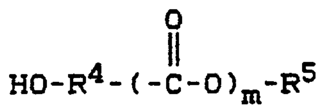 (I)

in which
$R^4$ is a difunctional aromatic radical containing 6 to 14 C atoms and
$R^5$ is an alkyl, cycloalkyl or aryl radical containing 1 to 20 C atoms or H and
m is the number 0 or 1,
or to formula (II)

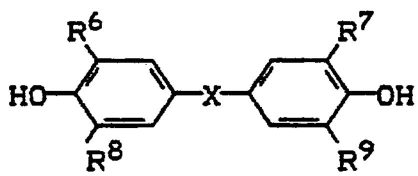 (II),

in which
$R^6$, $R^7$, $R^8$ and $R^9$ may be the same or different and represent a hydrogen atom, a $C_{1-4}$ alkyl radical, a chlorine or bromine atom and
X is a single bond, a $C_{1-8}$ alkylene or alkylidene radical, a $C_{5-15}$ cycloalkylene or cycloalkylidene radical, –S–,

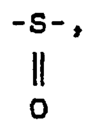

$–SO_2–$, –O– or

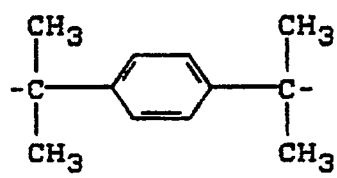

2. A process for the production of the compounds claimed in claim 1, characterized in that 70 to 99.5% by weight of a polyphenylene sulfide having a melt viscosity of at least 5 Pas (as measured at 306°C and a shear rate of $10^2$ Pa) and 0.5 to 30% by weight of a sulfonic acid ester obtainable as described in claim 1 are mixed together by adding the sulfonic acid ester to the polyphenylene sulfide melt and homogenizing the melt.

3. An injection molding process for the compounds claimed in claim 1, characterized in that a mixture of a polyphenylene sulfide having a melt viscosity of at least 5 Pas (as measured at 306°C at a shear rate of $10^2$ Pa) and a sulfonic acid ester obtainable as described in claim 1 is poured into moulds which have a temperature of no more than 120°C, the quantity of sulfonic acid ester being selected so that the injection-moulded polyphenylene sulfide part has at least 70% of the crystallinity reached in the extrusion of a part of unmodified polyphenylene sulfide at mould temperatures of at least 130°C.

## Revendications

1. Mélanges thermoplastiques à haute cristallinité et grande vitesse de cristallisation, constitués de
a) 70 à 99,5% en poids d'un polyphénylène-sulfure ayant une viscosité à l'état fondu d'au moins 5 Pas (mesurée à 306°C et sous un effort de poussée de $10^2$ Pa) et
b) 0,5 à 30% en poids, par rapport à a) et b), d'un ester d'acide sulfonique, qui est obtenu par réaction
1) d'un sulfochlorure d'alkyle de formule suivante
$R^1–CH_2–(CHR^2)_n–CH_2R^3$
dans laquelle
$R^1$, $R^2$ et $R^3$ représentent, indépendamment les uns des autres, H, Cl ou $SO_2Cl$, l'un au moins des restes devant être un reste $SO_2Cl$, "n" est un nombre entier de 3 à 33 et le rapport molaire $C/SO_2Cl$ a une valeur de 35 à 1,25
2) avec des quantités équivalentes d'un composé de formule (I)

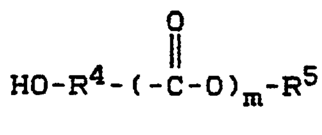

(I)

dans laquelle
$R^4$ est un reste aromatique divalent de 6 à 14 atomes de carbone et
$R^5$ est un reste alkyle, cycloalkyle, aryle ayant 1 à 20 atomes de carbone ou représente H et
m est le nombre 0 ou 1, ou
de formule (II)

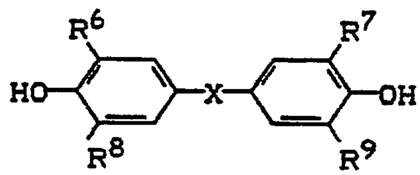

(II)

dans laquelle
$R^6$, $R^7$, $R^8$ et $R^9$ sont identiques ou différents et représentent un atome d'hydrogène, un reste alkyle ayant 1 à 4 atomes de carbone, un atome de chlore ou de brome et
X est une liaison simple, un reste alkylène ou alkylidène ayant 1 à 8 atomes de carbone, un reste cycloalkylène ou cycloalkylidène ayant 5 à 15 atomes de carbone, –S–,

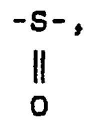

$–SO_2–$, –O– ou

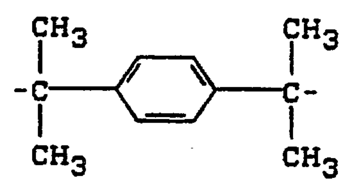

2. Procédé de production de mélanges suivant la revendication 1, caractérisé en ce qu'on mélange 70 à 99,5% en poids d'un polyphénylènesulfure ayant une viscosité à l'état fondu d'au moins 5 Pas (mesurée à 306°C et sous un effort de poussée de $10^2$ Pa) et 0,5 à 30% en poids d'un ester d'acide sulfonique qui est obtenu de la manière indiquée ci-dessus dans la revendication 1, en ajoutant l'ester d'acide sulfonique à la masse fondue de polyphénylènesulfure et en homogénéisant le mélange à l'état fondu.

3. Procédé de moulage par injection de mélanges suivant la revendication 1, caractérisé en ce qu'on coule un mélange d'un polyphénylènesulfure ayant une viscosité à l'état fondu d'au moins 5 Pas (mesurée à 306°C et sous un effort de poussée de $10^2$ Pa) et d'un ester d'acide sulfonique obtenu de la manière indiquée ci-dessus dans la revendication 1, dans des moules qui présentent une température ne dépassant pas 120°C, en choisissant la quantité d'ester d'acide sulfonique de manière que le polyphénylènesulfure moulé par injection présente au moins 70% de la cristallinité qui est atteinte lors du moulage par injection d'une pièce à partir de polyphénylènesulfure non modifié, à des températures du moule d'au moins 130°C.